(19) **Europäisches Patentamt**
**European Patent Office**
**Office européen des brevets**

(11) **EP 1 077 376 B1**

(12) **EUROPEAN PATENT SPECIFICATION**

(45) Date of publication and mention
of the grant of the patent:
**23.05.2012 Bulletin 2012/21**

(51) Int Cl.:
**G01N 29/44** *(2006.01)*    **G01N 29/07** *(2006.01)*
**G01N 29/40** *(2006.01)*

(21) Application number: **99973751.3**

(22) Date of filing: **03.03.1999**

(86) International application number:
**PCT/JP1999/001024**

(87) International publication number:
**WO 2000/052460 (08.09.2000 Gazette 2000/36)**

(54) **METHOD AND APPARATUS FOR ULTRASONIC FLAW DETECTION**

VERFAHREN UND VORRICHTUNG FÜR ULTRASCHAL-FEHLERDETEKTION

PROCEDE ET APPAREIL DE DETECTION DE FAILLES PAR ULTRASONS

(84) Designated Contracting States:
**DE ES FR GB IT NL**

(43) Date of publication of application:
**21.02.2001 Bulletin 2001/08**

(73) Proprietor: **JFE Steel Corporation**
**Tokyo (JP)**

(72) Inventors:
• **TAKADA, Hajime,**
**Technical Research Laboratories**
**Chiba-shi,**
**Chiba 260-0835 (JP)**
• **TORAO, Akira,**
**Technical Research Laboratories**
**Chiba-shi,**
**Chiba 260-0835 (JP)**

• **YARITA, Ikuo,**
**Technical Research Laboratories**
**Chiba-shi,**
**Chiba 260-0835 (JP)**

(74) Representative: **Henkel, Breuer & Partner**
**Patentanwälte**
**Maximiliansplatz 21**
**80333 München (DE)**

(56) References cited:
**EP-A- 0 164 168**    **EP-A- 1 014 085**
**JP-A- 07 253 414**    **US-A- 3 132 510**
**US-A- 5 824 908**

**Description**

**Technical Field**

The present invention relates to an ultrasonic flaw detection method and an instrument therefor. The present invention is specifically suitable for detecting internal flaws such as nonmetallic inclusions in a rolled metallic sheet including a steel sheet. By use of the present invention, flaw detection at a time of a linear region with definite width is possible.

**Background Art**

An internal flaw such as microscopic nonmetallic inclusion of approximately 50 μm in diameter in a rolled metallic sheet may cause a crack when the rolled metallic sheet is pressed or drawn. Therefore, it is required for the internal flaw inspection of a rolled metallic sheet to detect an extremely small internal flaw.

Generally, the ultrasonic flaw detection method is most frequently applied to internal flaw inspection of rolled metallic materials. In this method, ultrasonic waves are propagated into rolled metallic materials so as to detect discontinuity in ultrasound propagation caused by the internal flaw. As an applied example of this method, there is a method for flaw inspection of entire volume of the rolled metallic sheet at a transfer line of the rolled metallic sheet. In Japanese Unexamined Patent Publication No. 7-253414, for example, the following ultrasonic flaw detection method and the instrument therefor are proposed. That is, in medium, a line-focused ultrasonic transmitting probe and a linear probe array are arranged face to face with a sheet being inspected (a rolled metallic sheet) between them. A line-focused ultrasonic beam transmitted from the transmitting probe propagates into the sheet being inspected approximately in a perpendicular direction thereto, so that part of ultrasound reflected at an internal flaw in the sheet being inspected will be received by the linear probe array. After the ultrasonic signal which had been received and transformed into the electrical signal was amplified and only the echo from internal flaw was picked up therefrom, any signal greater than a predetermined threshold voltage is detected.

However, in order to detect flaws effectively by use of the above-mentioned ultrasonic flaw detection method and the instrument therefor, the gap length "Ls" (mm) between the line-focused ultrasonic transmitting probe and the linear probe array is required to satisfy the following equation. In this equation, "F" (mm) represents a focal length in medium, of the line-focused ultrasonic transmitting probe, and "t" (mm) denotes a thickness of the sheet being inspected.

$$\text{Ls} \;\leqq\; F - \{(CS \, / \, CW) - 1\}\, t + 5.5$$

(Provided that: "CS"; ultrasonic velocity (m/sec) in the sheet being inspected, "CW"; ultrasonic velocity (m/sec) in the medium)

Accordingly, when a steel sheet of 4.5 mm in thickness is inspected and the focal length in the medium of the line-focused ultrasonic transmitting probe "F" = 38 mm, the gap length "Ls" between the transmitting probe and the receiving probe is required to be less than 31 mm.

A problem with this method is that there may be cases that the sheet being inspected in on-line inspection has a wavy shape in its edge or side portion. When the sheet having such a wavy shape is passed through between the transmitting probe and the receiving probe with the gap length of less than 31 mm, it may frequently hit the housing of the probe to be scratched thereon. The impact of the hit on the probe shortens probe's useful life. In the worst case, the probe is broken.

EP-A-0164168 and US-A-5824908 respectively disclose flaw detection methods and devices which mainly utilize transmitted ultrasonic waves, i.e. waves that have been propagated into the sheet to be examined and that have directly passed the sheet, at least in a configuration where an ultrasonic transmitter and an ultrasonic receiver are arranged face to face with the sheet to be inspected between them.

It is an object of the present invention to provide an ultrasonic flaw detection method and an instrument therefor, having such an enough gap length between the transmitting probe and the receiving probe to be passed through by the sheet being inspected having a wavy shape that the sheet will not hit the probes and moreover being reliably detectable the internal flaw such as a microscopic nonmetallic inclusion.

Disclosure of Invention

The inventors have ardently studied conventional ultrasonic flaw detection methods, so that the present invention has been made based on a new knowledge that the gap length between a line-focused ultrasonic transmitting probe and a line-focused ultrasonic receiving probe is determined by the height of a flaw echo which is a function of a focal length in a coupling medium of the line-focused ultrasonic beam of the line-focused ultrasonic transmitting probe and a focal length in a coupling medium of the line-focused receiving beam of the line-focused ultrasonic receiving probe, and so forth. That is, summarized configurations of the present invention are as follows.

An ultrasonic flaw detection method comprising the features of claim 1 and an ultrasonic flow detecting instrument comprising the features of claim 5. Preferred embodiments of the method and the instrument are defined in the dependent claims.

Referring now to the drawings, the present invention will be described in detail.

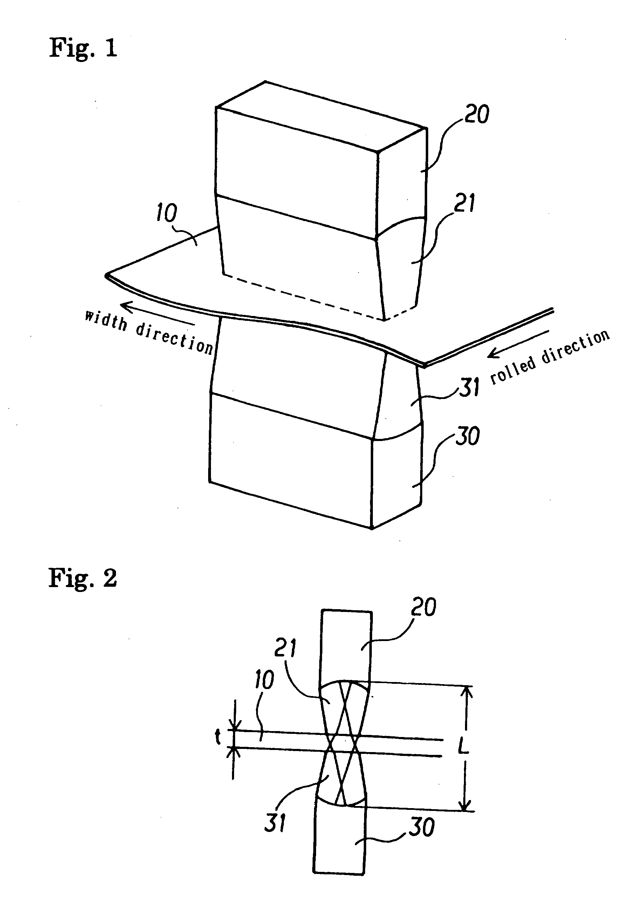

Fig. 1 shows a basic configuration of the present invention. A line-focused ultrasonic transmitter 20 and a line-focused ultrasonic receiver 30 are arranged face to face with a rolled metallic sheet 10 being inspected between them. Coupling medium such as water exists between the line-focused ultrasonic transmitter 20 and the sheet 10 being inspected, and between the line-focused ultrasonic receiver 30 and the sheet 10 being inspected. As for the line-focused ultrasonic transmitter 20 and the line-focused ultrasonic receiver 30, a line-focused single-element probe or a line-focused linear (one-dimensional) probe array may be used. Fig. 2 illustrates positional relationship between the line-focused ultrasonic transmitter 20 and the sheet 10 being inspected, and between the line-focused ultrasonic receiver 30 and the sheet 10 being inspected. The focal length of a line-focused ultrasonic beam 21 transmitted from the line-focused ultrasonic transmitter 20 in a coupling medium is denoted as "FT" (mm). The focal length of a line-focused receiving beam 31 formed by the line-focused ultrasonic receiver 30 in a coupling medium is denoted as "FR" (mm). At this time, the gap length "L" (mm) between the line-focused ultrasonic transmitter 20 and the line-focused ultrasonic receiver 30 is set so as to satisfy the equation (1). This is the feature of the present invention.

$$0.68(\mathrm{FT} + \mathrm{FR}) \leqq L + \{(\mathrm{CS} / \mathrm{CW}) - 1\} \, t \leqq 0.81(\mathrm{FT} + \mathrm{FR}) \text{ -------- (1)}$$

Provided that:

CS: the ultrasonic velocity in the rolled metallic sheet (m/sec),
CW: the ultrasonic velocity in the coupling medium (m/sec),
t: the thickness of the rolled metallic sheet (mm).

In Japanese Unexamined Patent Publication No. 7-253414, on the basis of an experimental result, when the focal length in the coupling medium of the line-focused beam transmitted from the ultrasonic transmitter is denoted as "F" (mm), the gap length "Ls" (mm) between the ultrasonic transmitter and the ultrasonic receiver is set so as to satisfy the equation (2). This is based on the result of the experiment in which, using the line-focused ultrasonic transmitter with the focal length "F" = 38 mm and water as the coupling medium, heights of echoes from internal flaws are measured by changing "Ls" from 10 mm to 35 mm approximately.

$$\mathrm{Ls} \leqq \mathrm{F} - \{(\mathrm{CS} / \mathrm{CW}) - 1\} \, t + 5.5 \text{ ---------(2)}$$

On the requirement of the equation (2), the contact accident of the sheet being inspected with the ultrasonic transmitter and the ultrasonic receiver cannot be avoided as described above.

Therefore, the inventors ardently studied the method and the instrument therefor to further increase the gap length between the ultrasonic transmitter and the ultrasonic receiver for preventing the contact accident. As a result of the study, it has been definitely shown by the present invention that the gap length between the ultrasonic transmitter and the ultrasonic receiver can be increased further, while moreover the echoes from internal flaws can be effectively received.

The experiment leading to the invention will be described.

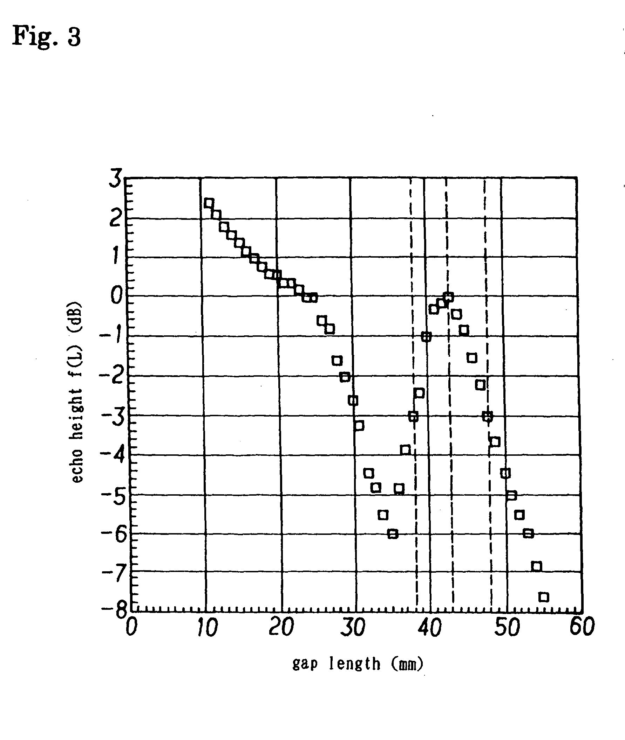

With an instrument comprising a line-focused ultrasonic transmitter with a focal length in water "FT" being 38 mm, and a line-focused ultrasonic receiver with a focal length in water "FR" being 38 mm, the relationship between the height of the echo from an internal flaw and the gap length "L" between the line-focused ultrasonic transmitter and the line-focused ultrasonic receiver is surveyed, using water as the coupling medium. A steel sheet of 4.5 mm in thickness having an internal flaw of 50 $\mu$m in width and 100 $\mu$m in length is used as the sheet being inspected. The result thereof is shown in Fig. 3.

The height "f(L)" of the echo from the internal flaw decreases as "L" increases in the range of "L" $\leqq$ 35 mm. The "f(L)", however, rises quickly in the range of "L" > 35 mm to take the maximum value at "L" = 43 mm, falls again thereafter. In the vicinity of the maximum value, the sufficient "f(L)" is secured.

The gap length "Lp" between the line-focused ultrasonic transmitter and the line-focused ultrasonic receiver in which the height "f(L)" of the echo from the internal flaw takes the maximum value is given by the equation (3).

$$Lp = 0.75(FT + FR) - \{(CS / CW) - \} t \ \text{------(3)}$$

Provided that;

FT: the focal length (mm) in the coupling medium of the line-focused beam transmitted by the line-focused ultrasonic transmitter,
FR: the focal length (mm) in the coupling medium of the line-focused beam formed by the line-focused ultrasonic receiver,
CS: the ultrasonic velocity (m/sec) in the sheet being inspected,
CW: the ultrasonic velocity (m/sec) in the coupling medium,
t: the thickness (mm) of the sheet being inspected.

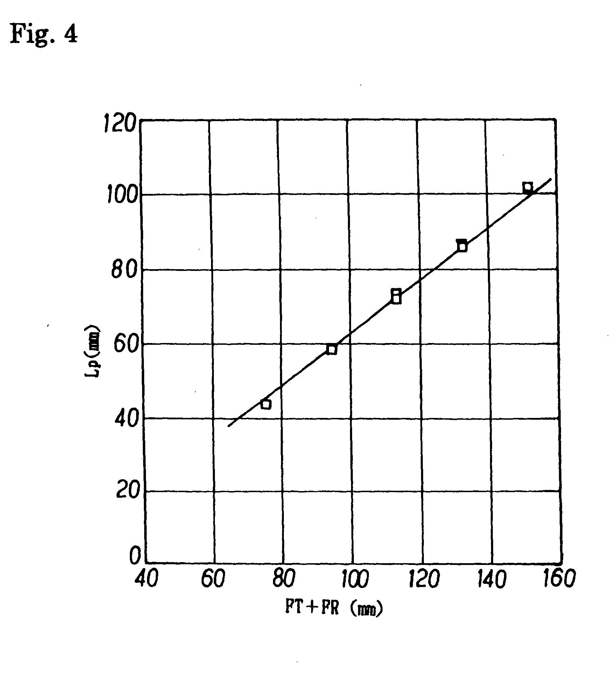

This relationship has been found by the following experiment. Three kinds of line-focused ultrasonic transmitters and of line-focused ultrasonic receivers, each kind having the focal length "FT" or "FR" in the coupling medium of 38 mm, 57 mm, and 76 mm, respectively, are prepared. Using water as the coupling medium, under the combination shown in Table 1, the same experiment as described above has been carried out to obtain the gap length "Lp" at which the height of the echo from the internal flaw takes the maximum value. The result thereof is shown in Fig. 4. The horizontal axis represents the sum of the focal length "FT" of the line-focused ultrasonic transmitter and the focal length "FR" of the line-focused ultrasonic receiver (FT + FR). The sum (FT + FR) and the minimum value of the gap length "Lp" in which the height of the echo from the internal flaw takes the maximum value are linearly correlated and the slope thereof is 0.75. Accordingly, the minimum value of the gap length "Lp" in which the height of the echo from the internal flaw takes the maximum value can be given by the equation (4).

$$Lp = 0.75 \ (FT + FR) + \ \alpha \ \ (\text{provided that } ``\alpha" \text{ is a constant})\text{-----(4)}$$

The value of the constant "α" has been studied as follows:

The value "α" is obtained from Fig. 4 to be approximately -13.4 (mm). It is estimated that the focal lengths "FT" and "FR" are observed to be reduced by refraction of the beam, when the sheet being inspected is located within the transmitting line-focused beam and the receiving line-focused beam. This effect can be expressed by obtaining the value "α" from the equation (5).

$$\alpha \ = - \{(CS / CW) - 1\} t \ \ \text{-------(5)}$$

CS = 5950 m/sec for the steel sheet, CW = 1500 m/sec for water at room temperature, and the steel sheet thickness for the experiment is 4.5 mm. Using these values, the right side of the equation (5) is calculated to obtain the value of -13.35 (mm), which quite coincides with the experimental result.

Therefore, the minimum value of the gap length "Lp" in which the height of the echo from the internal flaw takes the maximum value can be arranged to be the equation (3).

Practically, if the echo height is within -3 dB with reference to the maximum value flaw detection with sufficient signal to noise ratio can be achieved. Based on this value, allowable range of the gap length "L" are obtained. From Fig. 3, the range of the gap length "L" in which the echo height is within -3 dB with reference to the maximum value is obtained to be 38 to 48 mm.

As described above, the relationship between the height of the echo from the internal flaw and the gap length "L" depends on the focal length "FT" in the coupling medium of the line-focused beam transmitted by the line-focused ultrasonic transmitter and the focal length "FR" in the coupling medium of the line-focused beam formed by the line-focused ultrasonic receiver. Therefore, the allowable range of the gap length "L" can be also given by multiplying the sum of the focal length "FT" of the line-focused ultrasonic transmitter and the focal length "FR" of the line-focused ultrasonic receiver (FT + FR) by a coefficient.

The minimum of the allowable range of "L" is defined by "$L_{p1}$", while the maximum is represented by "$L_{p2}$. Provided that "$L_{p1}$" = 38 mm, the coefficient is calculated to be 0.68, and if "$L_{p2}$" = 48 mm, the coefficient is calculated to be 0.81. Therefore, $L_{p1}$ and $L_{p2}$ can be given by the following equation.

$$Lp_1 = 0.68(FT + FR) - \{(CS / CW) - 1\} t$$

$$Lp_2 = 0.81(FT + FR) - \{(CS / CW) - 1\} t$$

Accordingly, the allowable range of the gap length "L" can be given as follows.

$$0.68(FT + FR) \leqq L + \{(CS / CW) - 1\} t \leqq 0.81(FT + FR)$$

**Brief Description of the Drawings**

Fig. 1 is a basic conceptual view showing the relationship between the rolled direction of the sheet being inspected and the line direction of the line-focused beam in the present invention.
Fig. 2 is a schematic view showing the constitution in which a line-focused ultrasonic transmitter and a line-focused ultrasonic receiver are, arranged face to face with a sheet being inspected between them.
Fig. 3 is a graph of the experimental result showing the relationship between the gap length between two probes and the height of the echo from an internal flaw.
Fig. 4 is a graph of an experimental result showing the relationship between the sum of the focal lengths in the coupling medium of the two probes and the maximum value of the height of the echo from a flaw.
Fig. 5 is a conceptual view showing a configuration of an ultrasonic flaw detection instrument of the present invention.
Fig. 6 is a schematic view showing an example of means for setting the gap distance between the transmitting probes and the receiving proves.
Fig. 7 is a schematic view showing a configuration of a line-focused ultrasonic transmitter.
Fig. 8 is a schematic view showing a configuration of a line-focused ultrasonic receiver.

**Best Mode for Carrying Out the Invention**

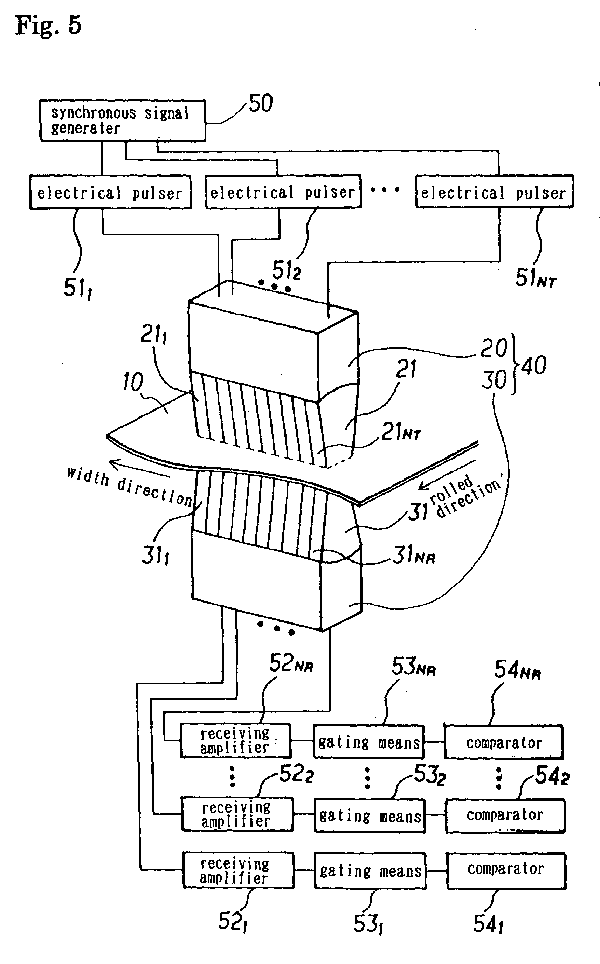

Referring to Fig. 5, an embodiment of the present invention will be described in detail. A line-focused ultrasonic transmitter 20 and a line-focused ultrasonic receiver 30 are arranged face to face with a steel sheet being inspected (a sheet 10 being inspected, which will be referred to a steel sheet 10) between them. As for a coupling medium between the line-focused ultrasonic transmitter 20 and the steel sheet 10, and between the line-focused ultrasonic receiver 30 and the steel sheet 10, water is used. The gap length "L" between the line-focused ultrasonic transmitter 20 and the line-focused ultrasonic receiver 30 is set so as to satisfy the following equation (1).

$$0.68(FT + FR) \leqq L + \{(CS / CW) - 1\} t \leqq 0.81(FT + FR) \text{------(1)}$$

Both of the line-focused ultrasonic transmitter 20 and the line-focused ultrasonic receiver 30 are line-focused linear prove arrays. The line-focused ultrasonic transmitter 20 and the line-focused ultrasonic receiver 30 are referred to a probe pair 40 hereafter. In addition, the number of elements of the line-focused ultrasonic transmitter 20 which is a line-focused linear (one-dimensional) probe array is referred to "NT" (being 10 herein), while the number of the elements of the line-focused ultrasonic receiver 30 which is a line-focused linear (one-dimensional) probe array is referred to "NR" (being 10 herein).
The probe pairs 40 are arranged in the width direction of the steel sheet 10 such that the whole width of the steel sheet 10 is inspected with the probe pairs 40 for the purpose of continuous flaw detection of the entire volume of the steel sheet 10. Electrical pulsers $51_1$ to $51_{NT}$ of the same number as the number of elements "NT" are connected to every each element of the line-focused ultrasonic transmitter 20. One or a plurality of synchronous signal generators 50 (one in Fig. 5) are connected to the electrical pulsers $51_1$ to $51_{NT}$. The synchronous signal generator 50 generates clock pulses so that all or a plurality of the electrical pulsers $51_1$ to $51_{NT}$ generate electrical pulses simultaneously (all simultaneously in Fig. 5). Electrical pulses are simultaneously generated from all or a plurality of the electrical pulsers $51_1$ to $51_{NT}$ (all simultaneously in Fig. 5) which receive clock pulses from the synchronous signal generator 50. The electrical pulses are applied to each element of the line-focused ultrasonic transmitter 20, so that line-focused ultrasonic beams $21_1$ to $21_{NT}$ are transmitted from each element of the line-focused ultrasonic transmitter 20 (transmitted simultaneously from all elements in Fig. 5). When the transmitted line-focused ultrasonic beams $21_1$ to $21_{NT}$ travel through water to reach the surface of the steel sheet 10, the beams propagate into the steel sheet 10 approximately in a thickness direction of the sheet. If an internal flaw exists in the beam path, parts of the line-focused ultrasonic beams $21_1$ to $21_{NT}$ are thereby reflected. The reflected ultrasound, which is reflected once again at the top or back surface of the steel sheet 10, travels through water after passing through the steel sheet 10 to be caught by line-focused receiving beams $31_1$ to $31_{NR}$ formed by the line-focused ultrasonic receiver 30, resulting in being received by the line-focused ultrasonic receiver 30. The element that receives the echo from the internal flaw in the line-focused ultrasonic receiver 30 depends on the location of the internal flaw in the width direction of the steel sheet 10. The echo from the internal flaw received by the line-focused ultrasonic receiver 30 is transformed into the electrical signal to be amplified by receiving amplifiers $52_1$ to $52_{NR}$. Only the signal of the echo from the internal flaw is picked up by gating means $53_1$ to $53_{NR}$ to be fed to comparators $54_1$ to $54_{NR}$. When the signal more than a predetermined threshold amplitude is input therein, the comparators $54_1$ to $54_{NR}$ output the electrical pulse which indicates the presence of the internal flaw.

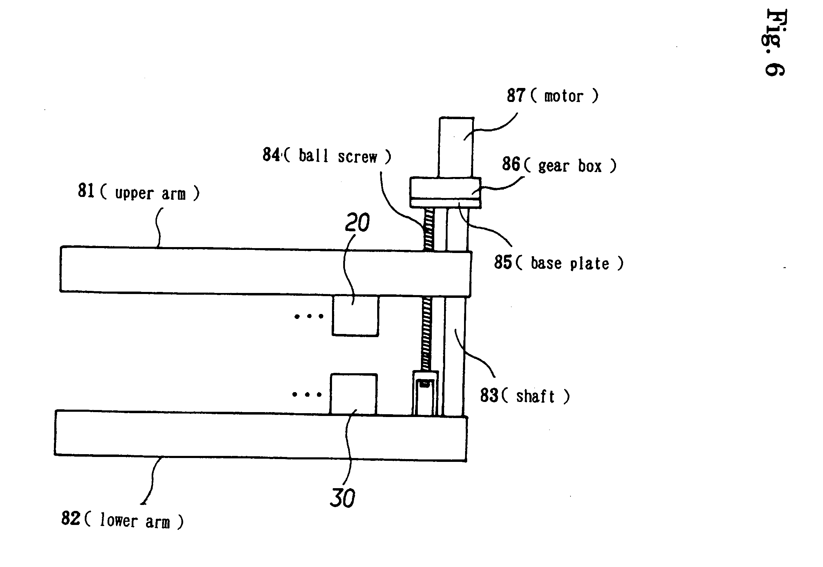

Gap length setting means applied to the present invention can be formed by employing a conventionally known technique, and an example thereof is shown in Fig. 6. Fig. 6 illustrates an example in which the gap length "L" is adjusted within the above-mentioned range by changing the position of the line-focused ultrasonic transmitter 20, while the position of the line-focused ultrasonic receiver 30 is fixed. An upper arm 81 mounting the line-focused ultrasonic transmitter 20 thereon is driven in the vertical direction by the rotation of a ball screw 84 rotated by the power of a motor 87 through gear-shifting by gears (omitted in the drawing) in a gear box 86. Although the line-focused ultrasonic transmitter 20 and the line-focused ultrasonic receiver 30 are illustrated as being only one for each for preventing complicatedness of the drawing, they are disposed such that the required number are arranged without a gap in the width direction of a steel sheet 10. A lower arm 82, a shaft 83, and a base sheet 85 are fixed, while the upper arm is slidable relative to the shaft 83.

Differently, another configuration, such as a structure in which the lower arm position is changeable or a structure in which both positions of the lower and upper arms are adjustable, may be adopted, and any of them can be formed by conventionally known means. On the other side surfaces (opposite sides to the shaft 83) of the upper and lower arms 81, 82, guiding means such as a shaft may be also formed.

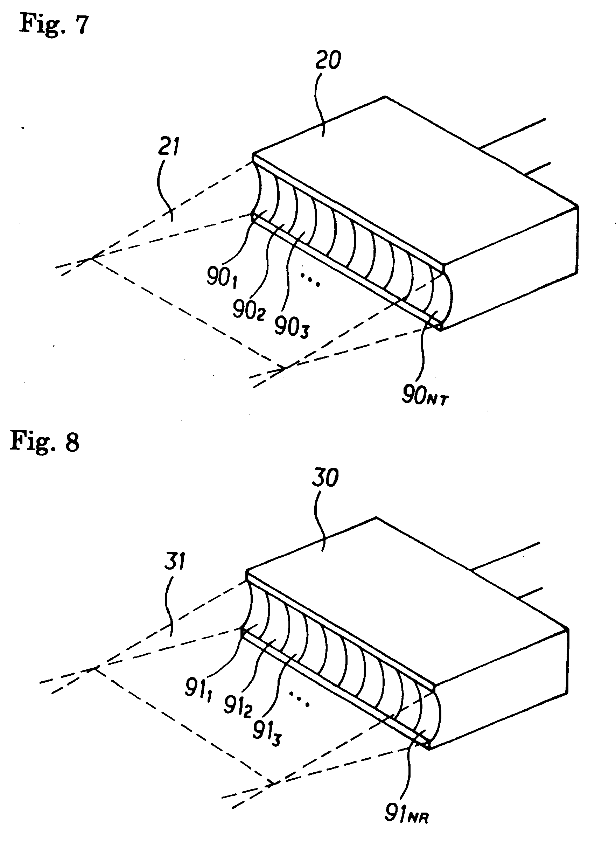

Fig. 7 illustrates a configuration of the line-focused ultrasonic transmitter 20, which is a line-focused linear (one-dimensional) probe array. NT pieces of piezoelectric elements $90_1$ to $90_{NT}$ are closely arranged with each other in the width direction, and moreover the surface of each element is formed in a cylindrical-concave surface. Accordingly, a line-focused ultrasonic beam that is linearly focused is transmitted. While line-focused ultrasonic beams $21_1$ to $21_{NT}$ are transmitted by each of elements (not shown), as a whole the line-focused ultrasonic beam 21 is formed. In addition, the width of the piezoelectric elements $90_1$ to $90_{NT}$ (the width in the arrangement direction of the elements) may preferably be 2.0 to 15 mm as disclosed in Japanese Unexamined Patent Publication No. 7-253414. In this manner, the line-focused ultrasonic transmitter 20, which is a line-focused linear (one-dimensional) probe array, can be formed.

Fig. 8 illustrates a configuration of the line-focused ultrasonic receiver 30, which is a line-focused linear (one-dimensional) probe array. The description in detail of this configuration is omitted because it is similar to the line-focused ultrasonic transmitter 20. In addition, the width of the piezoelectric elements $91_1$ to $91_{NR}$ (the width in the arrangement direction of the elements) may preferably be more than 1.0 mm as disclosed in Japanese Unexamined Patent Publication No. 7-253414. In this manner, the line-focused ultrasonic receiver 30, which is a line-focused linear (one-dimensional) probe array, can be formed.

Using the ultrasonic flaw detection instrument according to the present invention, the flaw detection of a steel sheet of 2.0 mm in thickness, 1000 mm in width is conducted.

The number of elements of the line-focused ultrasonic transmitter 20 which is a line-focused linear (one-dimensional) probe array is set at 10, and the width of the line-focused ultrasonic beam transmitted by each element is to be 6 mm. The number of elements of the line-focused ultrasonic receiver 30 which is a line-focused linear (one-dimensional) probe array is set at 10, and the width of a line-focused receiving beam formed by each element is to be 6 mm. The flaw detection of a linear region of 60 mm in length can be conducted by one of the probe pair 40. That is, the flaw detection of the steel sheet of 1000 mm in width can be conducted by only 17 pairs of the probe pairs 40.

Moreover, the gap length between the transmitting probes and the receiving probes can be set at 51 mm, which is larger by 13.5 mm than the gap length of 37.5 mm based on Japanese Unexamined Patent Publication No. 7-253414.

When the instrument based on the present invention has been continuously operated in on-line inspection for one month, no contact of a wavy steel sheet with the probe pair 40 could be found. For reference purposes, when the instrument based on Japanese Unexamined Patent Publication No. 7-253414 was operated at the gap length of 37.5 mm several times of contact a month were confirmed.

**Industrial Applicability**

By use of the present invention, the gap length between the line-focused ultrasonic transmitter and the line-focused ultrasonic receiver can be increased relative to a conventional art. Therefore, when a sheet being inspected having a wavy shape is passed through in on-line inspection, it does not contact with the transmitter and the receiver to be not scratched thereon, resulting in increasing the useful life of the probe pair. That is, by use of the present invention, continuous flaw detection of extremely microscopic internal flaws in a steel sheet can be reliably achieved with maintenance-free performance.

Table 1

|         | No.1 | No.2 | No.3 | No.4 | No.5 | No.6 |
|---------|------|------|------|------|------|------|
| FT      | 38   | 38   | 38   | 57   | 57   | 76   |
| FR      | 38   | 57   | 76   | 57   | 76   | 76   |
| FT + FR | 76   | 95   | 114  | 114  | 133  | 152  |
| | | | | | (unit: mm) | |

**Claims**

1. An ultrasonic flaw detection method comprising the steps of:

   arranging a line-focused ultrasonic transmitter (20) and a line-focused ultrasonic receiver (30) face to face with a sheet (10) being inspected between them, wherein a gap length L between the ultrasonic transmitter (20) and the ultrasonic receiver (30) is set to a value which is near a minimum value Lp at which a height f(L) of an echo of ultrasonic waves which have been reflected at an internal flaw in the sheet (10) and at a top or back surface of the sheet (10) takes a maximum value, wherein Lp is determined by a focal length (FT) of the line-focused ultrasonic transmitter (20) in the coupling medium, a focal length (FR) of the line-focused ultrasonic receiver (30) in the coupling medium, the velocity (CS) of ultrasonic waves in the sheet (10) being inspected, the velocity (CW) of ultrasonic waves in the coupling medium, and the thickness (t) of the sheet (10) being inspected;
   transmitting ultrasonic waves into the sheet (10) approximately in a perpendicular direction to the sheet (10) through a coupling medium with the ultrasonic transmitter (20);
   receiving the ultrasonic waves containing the echo from the internal flaw through the coupling medium with the ultrasonic receiver (30);
   transforming the received ultrasonic waves into electrical signals and amplifying the signals;
   picking up the amplified signals of the echo from the internal flaw; and
   detecting the internal flaw by detecting the signal more than a predetermined threshold amplitude.

2. The method according to claim 1, wherein, when Lp1 and Lp2 (Lp1 < Lp2) are the values of L in which f(L) gives f(L)/f(Lp) = -3dB, L is more than Lp1 and less than Lp2.

3. The method according to claim 1 or 2, wherein the coupling medium is a liquid, and wherein Lp satisfies Lp = 0.75(FT + FR) - {(CS/CW) - 1}t.

4. The method according to claim 3, wherein Lp1 and Lp2 satisfy Lp1 = 0.68(FT + FR) - {(CS/CW) - 1}t, Lp2 = 0.81(FT + FR) - {(CS/CW) - 1}t respectively.

5. An ultrasonic flaw detecting instrument comprising:

   a line-focused ultrasonic transmitter (20) for transmitting ultrasonic waves into a sheet (10) being inspected approximately in a perpendicular direction to the sheet (10) through a coupling medium;
   a line-focused ultrasonic receiver (30) for receiving ultrasonic waves through the coupling medium, the received ultrasonic waves containing an echo of ultrasonic waves which have been reflected at an internal flaw in the sheet (10) and at a top or back surface of the sheet (10),
wherein the ultrasonic transmitter (20) and the ultrasonic receiver (30) are arranged face to face with the sheet (10) being inspected adapted to be arranged between them,
wherein the gap length L between the ultrasonic transmitter (20) and the ultrasonic receiver (30) is set to a value which is near a minimum value Lp at which a height f(L) of the echo from the internal flaw in the sheet (10) and the top or back surface of the sheet (10) takes a maximum value, wherein Lp is determined by a focal length (FT) of said line-focused ultrasonic transmitter (20) in the coupling medium, a focal length (FR) of said line-focused ultrasonic receiver (30) in the coupling medium, the velocity (CS) of ultrasonic waves in the sheet (10) being inspected, the velocity (CW) of ultrasonic waves in the coupling medium, and a thickness (t) of the sheet (10) being inspected;
a receiving amplifier (52) for amplifying the signals resulting from a transformation of the received ultrasonic waves into electrical signals;
a gating means (53) for picking up amplified signals of the echo from the internal flaw; and
a comparator (54) for detecting the signals of the echo from the internal flaw which is more than or equal to a predetermined threshold amplitude.

6. The instrument according to claim 5, wherein when Lp1 and Lp2 (Lp1 < Lp2) are the values of L in which f(L) gives f(L)/f(Lp) = -3dB, L is more than Lp1 and less than Lp2.

7. The instrument according to claim 5 or 6, wherein the coupling medium is a liquid, and wherein Lp satisfies Lp = 0.75(FT + FR) - {(CS/CW) - 1}t.

8. The instrument according to claim 7, wherein Lp1 and Lp2 satisfy Lp1 = 0.68(FT + FR) - {(CS/CW) - 1}t, Lp2 = 0.81 (FT + FR) - {(CS/CW) - 1}t, respectively.

9. The instrument according to any one of claims 5 to 8, wherein said line-focused ultrasonic transmitter (20) and said line-focused ultrasonic receiver (30) are linear probe arrays, respectively.

**Patentansprüche**

1. Verfahren zur Ultraschallfehlerdetektion mit den Schritten:

   Anordnen eines zeilenfokussierten Ultraschallsenders (20) und eines zeilenfokussierten Ultraschallempfängers (30) einander zugewandt mit einer dazwischen angeordneten zu prüfenden Lage (10), wobei eine Zwischenraumlänge L zwischen dem Ultraschallsender (20) und dem Ultraschallempfänger (30) auf einem Wert eingestellt wird, welche nahe an einem Minimalwert Lp ist, bei welchem eine Höhe f(L) eines Echos von Ultraschallwellen, welche an einem internen Fehler in der Lage (10) und an einer oberen oder unteren Oberfläche der Lage (10) reflektiert wurden einen Maximalwert annimmt, wobei Lp bestimmt ist durch eine Brennweite (FT) des zeilenfokussierten Ultraschallsenders (20) in dem Kopplungsmedium, eine Brennweite (FR) des zeilenfokussierten Ultraschallempfängers (30) in dem Kopplungsmedium, die Geschwindigkeit (CS) von Ultraschallwellen in der zu prüfenden Lage (10), die Geschwindigkeit (CW) von Ultraschallwellen in dem Kopplungsmedium und die Dicke (t) der zu prüfenden Lage (10),
   Übertragen von Ultraschallwellen in die Lage (10) annähernd in einer rechtwinkligen Richtung zu der Lage (10) durch ein Kopplungsmedium mit dem Ultraschallsender (20),
   Empfangen der Ultraschallwellen, welche das Echo von dem internen Fehler enthalten, durch das Kopplungsmedium mit dem Ultraschallempfänger (30),
   Transformieren der empfangenen Ultraschallwellen in elektrische Signale und Verstärken der Signale,
   Aufnehmen der verstärkten Signale des Echos von dem internen Fehler, und
   Detektieren des internen Fehlers durch Detektieren des Signals, welches einen vorbestimmten Amplitudenschwellenwert überschreitet.

2. Das Verfahren gemäß Anspruch 1, wobei, wenn Lp1 und Lp2 (Lp1 < Lp2) diejenigen Werte von L sind, für die f(L) bei f(L)/f(Lp) = -3dB ergibt, L größer als Lp1 und kleiner als Lp2 ist.

3. Das Verfahren gemäß Anspruch 1 oder 2, wobei das Kopplungsmedium eine Flüssigkeit ist, und wobei Lp dem Ausdruck Lp = 0,75 (FT + FR) - {(CS/CW) - 1}t genügt.

4. Das Verfahren gemäß Anspruch 3, wobei Lp1 und Lp2 jeweils den Ausdrücken Lp1 = 0,68 (FT + FR) - {(CS/CW) - 1}t bzw. Lp2 = 0,81 (FT + FR) - {(CS/CW) - 1}t genügen.

5. Ein Instrument zur Ultraschallfehlerdetektion mit:

einem zeilenfokussierten Ultraschallsender (20), um Ultraschallwellen in eine zu prüfende Lage (10), näherungsweise in einer rechtwinkligen Richtung zu der Lage (10) durch ein Kopplungsmedium zu übertragen, einem zeilenfokussierten Ultraschallempfänger (30), um Ultraschallwellen durch das Kopplungsmedium zu empfangen, wobei die empfangenen Ultraschallwellen ein Echo von Ultraschallwellen enthalten, die an einem internen Fehler in der Lage (10) und an der oberen oder unteren Oberfläche der Lage (10) reflektiert wurden, wobei der Ultraschallsender (20) und der Ultraschallempfänger (30) einander zugewandt angeordnet sind und die zu prüfende Lage (10) dazwischen angeordnet werden kann, wobei die Zwischnraumlänge L zwischen dem Ultraschallsender (20) und dem Ultraschallempfänger (30) auf einem Wert eingestellt ist, der nahe einem Minimalwert Lp ist, an welchem eine Höhe f(L) des Echos von dem internen Fehler in der Lage (10) und der oberen oder der unteren Oberfläche der Lage (10) einen Maximalwert einnimmt, wobei Lp bestimmt ist durch eine Brennweite (FT) des zeilenfokussierten Ultraschallsenders (20) in dem Kopplungsmedium, eine Brennweite (FR) des zeilenfokussierten Ultraschallreceivers (30) in dem Kopplungsmedium, eine Geschwindigkeit (CS) von Ultraschallwellen in der zu prüfenden Lage (10), die Geschwindigkeit (CW) von Ultraschallwellen in dem Kopplungsmedium, und die Dicke (t) der zu prüfenden Lage (10), einem Empfangsverstärker (52) zum Verstärken der Signale, die aus einer Transformation der empfangenen Ultraschallwellen in elektrische Signale resultieren, einem Gatingmittel (53) zum Aufnehmen verstärkter Signale des Echos von dem internen Fehler, und einem Komparator (54) zum Erfassen derjenigen Signale des Echos von dem internen Fehler, welche größer oder gleich einer vorbestimmten Schwellenamplitude sind.

6. Das Instrument gemäß Anspruch 5, wobei, wenn Lp1 und Lp2 (Lp1 < Lp2) diejenigen Werte von L sind für die f(L) bei f(L)/f(Lp) = -3dB ergibt, wobei L größer als Lp1 und kleiner als Lp2 ist.

7. Das Instrument gemäß Anspruch 5 oder 6, wobei das Kopplungsmedium eine Flüssigkeit ist, und wobei Lp dem Ausdruck Lp = 0,75 (FT + FR) - {(CS/CW) - 1}t genügt.

8. Das Instrument gemäß Anspruch 7, wobei Lp1 und Lp2 den Ausdrücken Lp1 = 0,68 (FT + FR) - {(CS/CW) - 1}t bzw. Lp2 = 0,81 (FT + FR) - {(CS/CW) - 1}t genügen.

9. Das Instrument gemäß einem der Ansprüche 5 bis 8, wobei der zeilenfokussierte Ultraschallsender (20) und der zeilenfokussierte Ultraschallempfänger (30) jeweils lineare Prüfkopfarrays sind.

**Revendications**

1. Procédé de détection de défaut par ultrasons comprenant les étapes suivantes :

agencement d'un émetteur à ultrasons à focalisation linéaire (20) et d'un récepteur à ultrasons à focalisation linéaire (30) face à face avec une feuille (10) en cours d'inspection entre eux, où une longueur d'écartement L entre l'émetteur à ultrasons (20) et le récepteur à ultrasons (30) est établie à une valeur qui est proche d'une valeur minimale Lp à laquelle une hauteur f(L) d'un écho d'ondes ultrasonores qui ont été réfléchies au niveau d'un défaut interne de la feuille (10) et au niveau d'une surface supérieure ou arrière de la feuille (10) adopte une valeur maximale, où Lp est déterminée par une longueur focale (FT) de l'émetteur à ultrasons à focalisation linéaire (20) dans le milieu de couplage, et une longueur focale (FR) du récepteur à ultrasons de focalisation linéaire (30) dans le milieu de couplage, la vitesse (CS) des ondes ultrasonores dans la feuille (10) en cours d'inspection, la vitesse (CW) des ondes ultrasonores dans le milieu de couplage, et l'épaisseur (t) de la feuille (10) en cours d'inspection ; transmission d'ondes ultrasonores dans la feuille (10) approximativement dans une direction perpendiculaire à la feuille (10) via un milieu de couplage avec l'émetteur à ultrasons (20) ; réception des ondes ultrasonores contenant l'écho en provenance du défaut interne via le milieu de couplage avec le récepteur à ultrasons (30) ; transformation des ondes ultrasonores reçues en signaux électriques et amplification des signaux ;

collecte des signaux amplifiés de l'écho en provenance du défaut interne ; et

détection du défaut interne en détectant le signal de plus d'une amplitude seuil prédéterminée.

2. Procédé selon la revendication 1, dans lequel, lorsque Lp1 et Lp2 (Lp1 < Lp2) sont les valeurs de L où f (L) donne f(L)/f(Lp) = -3 dB, L est supérieure à Lp1 et inférieure à Lp2.

3. Procédé selon la revendication 1 ou 2, dans lequel le milieu de couplage est un liquide, et dans lequel Lp satisfait Lp = 0,75(FT + FR) - {(CS/CW)-1}t.

4. Procédé selon la revendication 3, dans lequel Lp1 et Lp2 satisfont Lp1 = 0,68(FT + FR) - {(CS/CW)-1}t, Lp2 = 0,81 (FT + FR) - {(CS/CW)-1}t, respectivement.

5. Instrument de détection de défaut par ultrasons comprenant :

un émetteur à ultrasons à focalisation linéaire (20) permettant d'émettre des ondes ultrasonores dans une feuille (10) en cours d'inspection approximativement dans une direction perpendiculaire à la feuille (10) via un milieu de couplage,

un récepteur à ultrasons à focalisation linéaire (30) permettant de recevoir des ondes ultrasonores via le milieu de couplage, les ondes ultrasonores reçues contenant un écho des ondes ultrasonores qui ont été réfléchies au niveau d'un défaut interne de la feuille (10) et au niveau d'une surface supérieure ou arrière de la feuille (10),

dans lequel l'émetteur à ultrasons (20) et le récepteur à ultrasons (30) sont agencés face à face avec la feuille (10) en cours d'inspection adaptée pour être agencée entre eux,

dans lequel la longueur d'écartement L entre l'émetteur à ultrasons (20) et le récepteur à ultrasons (30) est établie à une valeur qui est proche d'une valeur minimale Lp à laquelle une hauteur f(L) de l'écho en provenance du défaut interne de la feuille (10) et de la surface supérieure ou arrière de la feuille (10) adopte une valeur maximale, où Lp est déterminée par une longueur focale (FT) dudit émetteur à ultrasons à focalisation linéaire (20) dans le milieu de couplage, une longueur focale (FR) dudit récepteur à ultrasons de focalisation linéaire (30) dans le milieu de couplage, la vitesse (CS) des ondes ultrasonores dans la feuille (10) en cours d'inspection, la vitesse (CW) des ondes ultrasonores dans le milieu de couplage, et une épaisseur (t) de la feuille (10) en cours d'inspection ;

un amplificateur de réception (52) permettant d'amplifier les signaux résultant d'une transformation des ondes ultrasonores reçues en signaux électriques ;

un moyen de portillonnage (53) permettant de collecter les signaux amplifiés de l'écho en provenance du défaut interne ; et

un comparateur (54) permettant de détecter les signaux de l'écho en provenance du défaut interne qui est supérieur ou égal à une amplitude seuil prédéterminée.

6. Instrument selon la revendication 5, dans lequel lorsque Lp1 et Lp2 (Lp1 < Lp2) sont les valeurs de L où f(L) donne f(L)/f(Lp) = -3 dB, L est supérieure à Lp1 et inférieure à Lp2.

7. Instrument selon la revendication 5 ou 6, dans lequel le milieu de couplage est un liquide, et dans lequel Lp satisfait Lp = 0,75(FT + FR) - {(CS/CW)-1}t.

8. Instrument selon la revendication 7, dans lequel Lp1 et Lp2 satisfont Lp1 = 0,68(FT + FR) - {(CS/CW)-1}t, Lp2 = 0,81(FT + FR) - {(CS/CW)-1}t, respectivement.

9. Instrument selon l'une quelconque des revendications 5 à 8, dans lequel ledit émetteur à ultrasons à focalisation linéaire (20) et ledit récepteur à ultrasons à focalisation linéaire (30) sont des matrices de sonde linéaires, respectivement.

# Fig. 1

width direction

rolled direction

# Fig. 2

# Fig. 3

Fig. 4

# Fig. 5

EP 1 077 376 B1

Fig. 6

87 ( motor )

84 ( ball screw )

86 ( gear box )

81 ( upper arm )

20

85 ( base plate )

83 ( shaft )

82 ( lower arm )

30

Fig. 7

20

21

$90_1$

$90_2$  $90_3$

. . .

$90_{NT}$

Fig. 8

30

31

$91_1$  $91_2$

$91_3$

. . .

$91_{NR}$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7253414 A

- EP 0164168 A
- US 5824908 A